# EUROPEAN PATENT APPLICATION

(11) **EP 4 641 014 A1**
(43) Date of publication of application: **29.10.2025**
(21) Application number: 23905131.1
(22) Date of filing: 17.05.2023
(51) Int. Cl.: F04B 39/16, F04B 39/06, F04B 39/10

(54) **AIR COMPRESSION PRETREATMENT SYSTEM**

(30) Priority: 20.12.2022 CN 202211643050
(71) Applicant: Puresci Environmental Technology Co., Ltd, Wuxi, Jiangsu 214000 (CN)
(72) Inventor: ZHANG, Yang, Wuxi, Jiangsu 214000 (CN); JIA, Dongxin, Wuxi, Jiangsu 214000 (CN)
(74) Representative: Cabinet Chaillot
(86) International application number: PCT/CN2023/094755
(87) International publication number: WO 2024/130941

(57) **Abstract**

An air compression pretreatment system includes a dehumidification passage (1), a heat recovery module (27), and a regulation passage (3). The dehumidification passage (1) is located at an upstream position of an air compressor (5) and includes a desiccant wheel (19). The heat recovery module (27) includes a first regeneration passage (2) upstream of which is connected to a heat exchanger (4) and the air compressor (5) in series. The regulation passage (3) and the dehumidification passage (1) form a circulation passage. When the air compressor (5) works at a variable frequency, the quantities of air in the dehumidification passage (1) and the regulation passage (3) are dynamically balanced. The operating power consumption of the air compression pretreatment system is reduced, and the system is more stable and energy-efficient.

## Description

The present application claims priority to Chinese Patent No.2022116430502, filed on December 20, 2022, which is incorporated herein by reference in its entirety.

### FIELD

The present application relates to the technical field of air treatment, in particular to an air compression pretreatment system.

### BACKGROUND

Compressed air, as the second major industrial power source, plays an important role in the field of industrial production. The upgrading of the industrial structure and the transformation of industrial production to a more intelligent and precise production mode lead to wider application of compressed air and higher requirements for the quality of compressed air. Clean and oilless compressed air with an ultralow pressure dew point becomes the first choice, which requires an oilless air compressor and the use of a water cooler, a refrigeration dryer or an adsorption dryer as posttreatment equipment. However, due to the properties of compressed air and the energy conversion characteristics of the air compressor, equipment adopting the air compressor and posttreatment is high in energy consumption and low in energy utilization efficiency.

The refrigeration dryer cannot use waste heat of the air compressor, and high-temperature compressed air and high-temperature lubricating oil are discharged from an air cooler in the form of heat energy, which is not environmentally friendly. The operating environment of the refrigeration dryer is limited, and the refrigeration dryer cannot operate normally in environments where the temperature is too low (lower than 0°C) or too high (higher than 38°C), ventilation is poor and air is polluted. The power consumption of the refrigeration dryer is higher, and the power consumption will be increased by 35% every time the inlet air temperature rises by 5°C.

The adsorption dryer has a large size and a complex structure and is provided with two adsorbent tanks and a transport device. The pressure dew point is unstable due to nonuniform air distribution, the types of adsorbents, the filling temperature, the tunnel effect and other problems. Energy consumption is high: because of the low instant desorption capacity of adsorbents, a large quantity of energy will be consumed for desorption. The pressure loss is large: compressed air passes through multiple layers of adsorbents, leading to a large pressure loss. The quality of compressed air is poor: adsorbent dust is easily mixed with compressed air, reducing the quality of the compressed air.

The air compressor compresses air by means of a compressor to convert mechanical energy into internal energy. However, in the air compression process, a large proportion of mechanical energy is directly converted into heat energy, leading to a rise in the temperature of compressed air, which is not beneficial to the air compressor. For this reason, the outlet air pressure of a first-stage air compressor will not be too high. High-temperature air discharged from the air compressor needs to be cooled to be subjected to second-stage compression and even third-stage compression. The compressed air is cooled and discharged to be treated by posttreatment equipment to obtain dry compressed air, which is then delivered to equipment requiring the compressed air. The energy consumption of a whole system is high, and energy conversion efficiency is low; when the inlet air temperature is high, a negative impact will be exerted on the operation of the air compressor. Therefore, pretreatment of air entering the air compressor appears to be particularly important.

### SUMMARY

In view of the defects of posttreatment of the air compressor and the waste of heat energy of the air compressor, the objective of the application is to provide an improved air compression pretreatment system.

The objective of the application is fulfilled by the following technical solution:

The present application provides an air compression pretreatment system, being configured for pretreatment of air entering an air compressor, and comprising:
a dehumidification passage, the dehumidification passage being located at an upstream position of the air compressor and comprising a dehumidification unit and a cooling unit, the dehumidification unit comprising a desiccant wheel, and the desiccant wheel comprising at least one regeneration area and a treatment area;
a heat recovery module, the heat recovery module comprising a first regeneration passage, upstream of the first regeneration passage being connected to a heat exchanger and the air compressor in series and downstream of the first regeneration passage being connected to the regeneration area; and
a regulation passage, the regulation passage and the dehumidification passage forming a circulation passage;
wherein, in variable-frequency operation of the air compressor, the quantities of air in the dehumidification passage and the regulation passage are dynamically balanced.

In some embodiments, a first three-way valve is arranged at an inlet of the dehumidification passage, and an end of the first three-way valve is connected to an outlet of the regulation passage; and a second three-way valve is arranged at an outlet of the dehumidification passage, an end of the second three-way valve is connected to an inlet of the regulation passage.

In some embodiments, when an operating frequency of the air compressor and an amount of air being suctioned is reduced, the first three-way valve and the second three-way valve can be regulated to increase the quantity of air entering the regulation passage, and remain the quantity of air in the humidification passage unchanged.

In some embodiments, the at least one regeneration area comprises a first regeneration area, the first regeneration passage comprises a first heating coil, a water inlet end of the first heating coil is connected to a high-temperature water tank unit, a water outlet end of the first heating coil is connected to a low-temperature water tank unit, and a temperature of high-temperature water in the high-temperature water tank unit is higher than a temperature of low-temperature water in the low-temperature water tank unit.

In some embodiments, the low-temperature water tank unit is located at an upstream position of the heat exchanger such that low-temperature water is capable of flowing into the heat exchanger and exchanging heat in the heat exchanger; and the high-temperature water tank unit is located at a downstream position of the heat exchanger, and after exchanging heat in the heat exchanger, the low-temperature water flows into the high-temperature water tank unit.

In some embodiments, the at least one regeneration area further comprises a second regeneration area, the second regeneration area is connected to a second regeneration passage, and an inlet of the second regeneration passage is connected to the dehumidification passage and located at a downstream position of the treatment area of the desiccant wheel.

In some embodiments, the second regeneration passage comprises a second heating coil, a water inlet end of the second heating coil is connected to the high-temperature water tank unit, a water outlet end of the second heating coil is connected to the low-temperature water tank unit, and the second heating coil and the first heating coil are connected in parallel.

In some embodiments, when rotating, the desiccant wheel rotates from the first regeneration area to the second regeneration area, and a temperature of the second regeneration area is higher than a temperature of the first regeneration area.

In some embodiments, an electric heater is arranged on the second regeneration passage and configured for further heating air, which is heated by the second heating coil, in the second regeneration passage.

In some embodiments, the cooling unit comprises a front surface air cooler located at an upstream position of the desiccant wheel and a rear surface air cooler located at a downstream position of the desiccant wheel.

The application has at least the following beneficial effects:

The air compression pretreatment system can reduce the temperature and humidity of air entering the air compressor, change the operating interval of the air compressor, reduce operating power and the maintenance cost, also reduce the investment cost and operating energy consumption of posttreatment equipment (an adsorption dryer) and improve the quality and stability of compressed air; and heat energy in high-temperature air discharged by the air compressor is recovered to serve as a regenerated heat source, and the regulation passage can be controlled and switched to greatly reduce the operating power consumption of the air compression pretreatment system and reduce the performance delay of the air compression pretreatment system caused by the change of the quantity of air desired by the air compressor, such that the whole system is more stable and energy-efficient.

### BRIEF DESCRIPTION OF THE DRAWINGS

FIG. 1 is a schematic diagram of an air compression pretreatment system according to Embodiment 1 of the application;
FIG. 2 is a schematic diagram of an air compression pretreatment system according to Embodiment 2 of the application;
FIG. 3 is a schematic diagram of an air compression pretreatment system according to Embodiment 3 of the application.

In FIGS.: 1, dehumidification passage; 2, first regeneration passage; 3, regulation passage; 4, heat exchanger; 5, air compressor; 6, first regeneration area; 7, first three-way valve; 8, second three-way valve; 9, front surface air cooler; 10, rear surface air cooler; 11, first heating coil; 12, high-temperature water pump; 13, high-temperature water tank; 14, low-temperature water tank; 15, low-temperature water pump; 16, second heating coil; 17, electric heater; 18, second regeneration area; 19, desiccant wheel; 20, regeneration area; 21, treatment area; 22, primary filter; 23, second regeneration passage; 24, valve; 25, dehumidification unit; 26, cooling unit; 27, heat recovery module; 28, high-temperature water tank unit; 29, low-temperature water tank unit.

### DESCRIPTION OF THE EMBODIMENTS

The application is described in detail below in conjunction with accompanying drawings. The following description is illustrative and explanatory and should not be construed as a limitation of the protection scope of the application.

It should be noted that the terms "upstream" and "downstream" are defined based on positions with respect to the flow direction of air or water; terms such as "high temperature" and "low temperature" are relative levels rather than absolute levels; terms such as "central", "upper", "lower", "left", "right", "vertical", "horizontal", "inner" and "outer" are used to indicate directional or positional relations based on the accompanying drawings merely for facilitating and simplifying the description of the application, do not indicate or imply that devices or elements referred to must be in a specific direction or be configured and operated in a specific direction, and thus should not be construed as limitations of the application. In addition, the terms "first", "second" and "third" are merely for the purpose of description and should not be construed as indicating or implying relative importance.

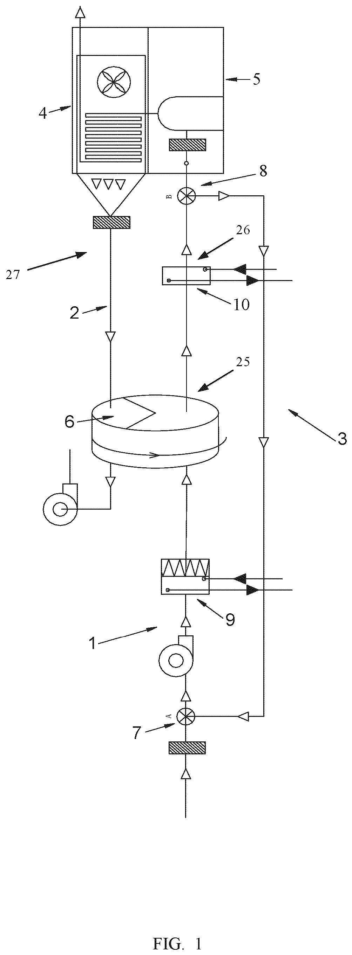

Refer to FIGS. 1-3, wherein FIG. 1 is a schematic diagram of an air compression pretreatment system according to Embodiment 1 of the application. The application provides an air compression pretreatment system, which is configured for pretreatment of air entering an air compressor 5 and comprises a dehumidification passage 1, a heat recovery module 27 and a regulation passage 3.

The dehumidification passage 1 is located at an upstream position of the air compressor 5 and configured for dehumidifying and cooling air to be treated and then inputting the dehumidified and cooled air to the air compressor 5. The dehumidification passage 1 comprises a dehumidification unit 25 and a cooling unit 26. The dehumidification unit 25 comprises a desiccant wheel 19, and the desiccant wheel 19 comprises a regeneration area 20 and a treatment area 21. The air to be treated is preliminarily filtered (by a primary filter 22) to filter out large particulate impurities and dust and then pushed by a fan to flow into the dehumidification passage 1; when the air passes through the treatment area 21 of the desiccant wheel 19, moisture in the air is adsorbed, such that the air is dried; after the moisture in the air is adsorbed in the treatment area 21 of the desiccant wheel 19, the treatment area 21 of the desiccant wheel 19 rotates to the regeneration area 20 where the desiccant wheel 19 is desorbed by high-temperature air, such that the desiccant wheel 19 works cyclically. The cooling unit 26 of the dehumidification passage 1 may be a surface air cooler or other refrigeration devices, and multiple cooling units 26 may be arranged. A front surface air cooler 9 is arranged at an upstream position of the desiccant wheel 19 such that the low-temperature air to be treated can improve the dehumidification efficiency of the desiccant wheel 19. A rear surface air cooler 10 may be arranged at a downstream position of the desiccant wheel 19 to further cool the dehumidified air. The low-temperature dry air enters the air compressor 5, such that energy consumption of the air compressor 5 can be reduced, and the maintenance cost of the air compressor 5 is further reduced, and the operating cost of posttreatment equipment is reduced.

The heat recovery module 27 comprises a first regeneration passage 2. The upstream of the first regeneration passage 2 is connected to a heat exchanger 4 and the air compressor 5 in series and the downstream of the first regeneration passage 2 is connected to the regeneration area 20. A large quantity of heat generated in operation of the air compressor 5 is recovered by the heat exchanger 4, and the air exchanges heat with the heat exchanger 4, such that the temperature of the air is increased. The high-temperature air is delivered to the regeneration area 20 of the desiccant wheel 19 by means of the first regeneration passage 2 to realize regeneration of the desiccant wheel 19. The high-temperature air is regenerated by means of the heat energy from the air compressor 5, and an extra heat source for heating air is not needed, such that energy is effectively saved, and environmental pollution is reduced.

The regulation passage 3 and the dehumidification passage 1 form a circulation passage. In variable-frequency operation of the air compressor 5, the quantity of air in the dehumidification passage 1 and the quantity of air in the regulation passage 3 are dynamically balanced. A second three-way valve 8 is arranged at an outlet of the dehumidification passage 1 and one end of the second three-way valve 8 is connected to an inlet of the regulation passage 3. The second three-way valve 8 is configured to divide air flowing out of the dehumidification passage 1 into two paths, wherein one path of the air flows into the regulation passage 3, and the other path of the air flows into the air compressor 5. A first three-way valve 7 is arranged at an inlet of the dehumidification passage 1, one end of the first three-way valve 7 is connected to an outlet of the regulation passage 3, and air flowing out of the regulation passage 3 and the air to be treated are mixed by the first three-way valve 7. The mixed air is delivered into the dehumidification passage 1 by means of an air feeder. When the operating frequency of the air compressor 5 and air suction are reduced, the first three-way valve 7 and the second third-way valve 8 can be regulated to increase the quantity of air entering the regulation passage 4 and reduce the quantity of input air to be treated. When the operating frequency of the air compressor 5 and the air suction are increased, the first three-way valve 7 and the second three-way valve 8 can be regulated to reduce the quantity of air entering the regulation passage 3 and increase the quantity of input air to be treated. In this way, the quantity of air in the dehumidification passage 1 will remain unchanged no matter how the operating frequency of the air compressor 5 changes, and adjustments of a series of related components such as the desiccant wheel 19 and the surface air coolers, which may otherwise prolong the response time of the system and increase instabilities in variable-frequency operation of the air compressor 5, are avoided when the quantity of air in the dehumidification passage 1 is changed. According to the air compression pretreatment system, the operating frequency of the air compressor 5 changes continuously under different working conditions, and under the condition that the quantity of air entering the air compressor 5 changes continuously, operating energy consumption of the air compression pretreatment system can be reduced when the quantity of air required by the air compressor 5 is reduced, and the performance delay of the air compression pretreatment system can be reduced when the quantity of air required by the air compressor 5 is increased.

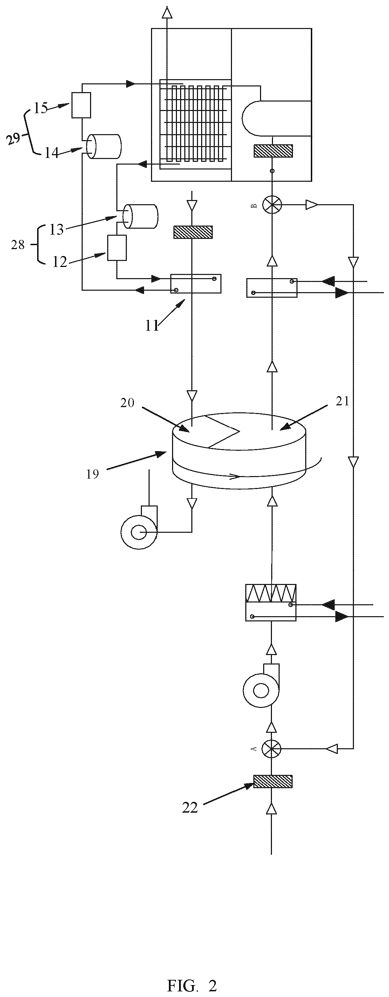

In a case of only one air compressor 5, the heat recovery structure is relatively simple, and the system stability is guaranteed. In a case of multiple air compressors 5, it is difficult to recover and collect the heat energy from all the air compressors 5, and the system stability is poor. Refer to FIG. 2 which is a schematic diagram of the air compression pretreatment system according to Embodiment 2 of the application. For the sake of a brief description, structures that are the same as those in Embodiment 1 will not be repeated. In Embodiment 2, a high-temperature water tank unit 28 and a low-temperature water tank unit 29 are added, the first regeneration passage 2 comprises a first heating coil 11, a water inlet end of the first heating coil 11 is connected to the high-temperature water tank unit 28. The high-temperature water tank unit 28 comprises a high-temperature water tank 13 and a high-temperature water pump 12. A water outlet end of the first heating coil 11 is connected to the low-temperature water tank unit 29. The low-temperature water tank unit 29 comprises a low-temperature water tank 14 and a low-temperature water pump 15. High-temperature water in the high-temperature water tank 13 flows into the first heating coil 11 by means of the high-temperature water pump 12. Air exchanges heat with the high-temperature water by means of the first heating coil 11, such that the temperature of the air is increased; then the air flows into the regeneration area 20 of the desiccant wheel 19 by means of the first regeneration passage 2, and the high-temperature water is cooled and then flows into the low-temperature water tank 14. The low-temperature water tank unit 29 is located at an upstream position of the heat exchanger 4, and the high-temperature water tank unit 28 is located at a downstream position of the heat exchanger 4. The low-temperature water in the low-temperature water tank 14 flows into the heat exchanger 4 by means of the low-temperature water pump 15, exchanges heat with high-temperature compressed air in the air compressor 5 to be heated and flows into the high-temperature water tank 13 again, and the process is repeated. The temperature of the high-temperature water is higher than the temperature of the low-temperature water. This embodiment is suitable for, for example, an operating environment where multiple air compressors 5 are arranged, and heat of the multiple air compressors 5 is recovered to serve as a regenerated heat source of the air compression pretreatment system, such that operating energy consumption of pretreatment equipment is greatly reduced, and the system stability is improved.

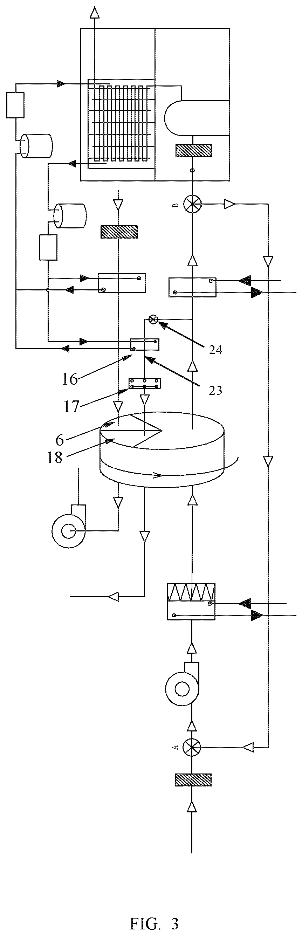

In Embodiment 2, the desiccant wheel 19 comprises only one regeneration area 20. Refer to FIG. 3 which is a schematic diagram of an air compression pretreatment system according to Embodiment 3 of the invention. In Embodiment 3, the desiccant wheel 19 comprises a first regeneration area 6 and a second regeneration area 18, that is to way, the regeneration area 20 is divided into the first regeneration area 6 and the second regeneration area 18. The heat recovery module 27 comprises a second regeneration passage 23, an inlet of the second regeneration passage 23 is connected to the dehumidification passage 1 and located at a downstream position of the desiccant wheel 19. A valve 24 is arranged at the inlet of the second regeneration passage 23 and configured for controlling the quantity of air flowing into the second regeneration passage 23. Moisture of air flowing out of the treatment area 21 of the desiccant wheel 19 is adsorbed by the desiccant wheel 19, such that the temperature of the air is increased, the humidity of the air is decreased, and the air turns into dry air. Part of the treated air flows to the surface air cooler 10, cooled by the surface air cooler 10 and then flows to the air compressor 5, and the other part of the treated air flows to the second regeneration passage 23. When rotating, the desiccant wheel 19 rotates from the first regeneration area 6 to the second regeneration area 18, and the temperature of the second regeneration area 18 is higher than the temperature of the first regeneration area 6.

A second heating coil 16 is arranged on the second regeneration passage 23 and is configured for heating air in the second regeneration passage 23. The heated air flows to the second regeneration area 18. A water inlet end of the second heating coil 16 is connected to the high-temperature water tank unit 28, a water outlet end of the second heating coil 16 is connected to the low-temperature water tank unit 29, the second heating coil 16 and the first heating coil 11 are connected in parallel, high-temperature water in the high-temperature water tank 13 may be synchronously supplied to the first heating coil 11 and the second heating coil 16. Low-temperature water obtained after heat exchange by the first heating coil 11 and the second heating coil 16 is collected into the low-temperature water tank 14, and collected heat energy of the air compressor 5 may be supplied to multiple regeneration passages, such that the dehumidification effect of the desiccant wheel 19 is further improved, the treatment effect of the air compression pretreatment system is improved, and the operating energy consumption of the air compression pretreatment system is reduced. To guarantee the stability of the regeneration temperature in the second regeneration passage 23, an electric heater 17 is arranged on the second regeneration passage 23 and configured for further heating air in the second regeneration passage 23. In this embodiment, the desiccant wheel 19 comprises a first regeneration area 6 and a second regeneration area 18, a regeneration passage is provided for each of the first regeneration area 6 and the second regeneration area 18, and each regeneration passage recovers heat energy at a different angle, such that the regeneration effect of the regeneration area 20 of the desiccant wheel 19 is improved, heat energy can be fully recovered, the energy utilization rate is increased, and the operating energy consumption of pretreatment equipment is reduced. The structure of the second regeneration passage 23 in this embodiment is also suitable for Embodiment 1.

In the related art, a refrigeration dryer or an adsorption dryer is configured for posttreatment; power consumption of the refrigeration dryer is high, and the power consumption will be increased by 35% every time the inlet air temperature is increased 5°C. Because of the low instant desorption capacity of adsorbents of the adsorption dryer, a large quantity of energy will be consumed for desorption. From the perspective of pretreatment, the air compression pretreatment system adjusts the temperature and humidity of air entering the air compressor 5 to guarantee the temperature and humidity of air output by the air compressor 5, such that during posttreatment of air discharged by the air compressor 5, the problems of pressure dew point and energy consumption of the refrigeration dryer and the adsorption dryer are solved.

The above embodiments of the application should not be construed as limitations of the protection scope of the application. Any modifications, equivalent substitutions and improvements made based on the spirit and principle of the application should fall within the protection scope of the claims of the application.

## Claims

1. An air compression pretreatment system, being configured for pretreatment of air entering an air compressor, and comprising:
a dehumidification passage, the dehumidification passage being located at an upstream position of the air compressor and comprising a dehumidification unit and a cooling unit, the dehumidification unit comprising a desiccant wheel, and the desiccant wheel comprising at least one regeneration area and a treatment area;
a heat recovery module, the heat recovery module comprising a first regeneration passage, upstream of the first regeneration passage being connected to a heat exchanger and the air compressor in series and downstream of the first regeneration passage being connected to the regeneration area; and
a regulation passage, the regulation passage and the dehumidification passage forming a circulation passage;
wherein, in variable-frequency operation of the air compressor, the quantities of air in the dehumidification passage and the regulation passage are dynamically balanced.

2. The air compression pretreatment system according to Claim 1, wherein a second three-way valve is arranged at an outlet of the dehumidification passage, an end of the second three-way valve is connected to an inlet of the regulation passage, a first three-way valve is arranged at an inlet of the dehumidification passage, and an end of the first three-way valve is connected to an outlet of the regulation passage.

3. The air compression pretreatment system according to Claim 2, wherein when an operating frequency of the air compressor and an amount of air being suctioned is reduced, the first three-way valve and the second three-way valve can be regulated to increase the quantity of air entering the regulation passage, and remain the quantity of air in the humidification passage unchanged.

4. The air compression pretreatment system according to Claim 3, wherein the at least one regeneration area comprises a first regeneration area, the first regeneration passage comprises a first heating coil, a water inlet end of the first heating coil is connected to a high-temperature water tank unit, a water outlet end of the first heating coil is connected to a low-temperature water tank unit, and a temperature of high-temperature water in the high-temperature water tank unit is higher than a temperature of low-temperature water in the low-temperature water tank unit.

5. The air compression pretreatment system according to Claim 4, wherein the low-temperature water tank unit is located at an upstream position of the heat exchanger such that low-temperature water is capable of flowing into the heat exchanger and exchanging heat in the heat exchanger; and
the high-temperature water tank unit is located at a downstream position of the heat exchanger, and after exchanging heat in the heat exchanger, the low-temperature water flows into the high-temperature water tank unit.

6. The air compression pretreatment system according to Claim 5, wherein the at least one regeneration area further comprises a second regeneration area, the second regeneration area is connected to a second regeneration passage, and an inlet of the second regeneration passage is connected to the dehumidification passage and located at a downstream position of the treatment area of the desiccant wheel.

7. The air compression pretreatment system according to Claim 6, wherein the second regeneration passage comprises a second heating coil, a water inlet end of the second heating coil is connected to the high-temperature water tank unit, a water outlet end of the second heating coil is connected to the low-temperature water tank unit, and the second heating coil and the first heating coil are connected in parallel.

8. The air compression pretreatment system according to Claim 6, wherein when rotating, the desiccant wheel rotates from the first regeneration area to the second regeneration area, and a temperature of the second regeneration area is higher than a temperature of the first regeneration area.

9. The air compression pretreatment system according to Claim 7, wherein an electric heater is arranged on the second regeneration passage and configured for further heating air, which is heated by the second heating coil, in the second regeneration passage.

10. The air compression pretreatment system according to Claim 1, wherein the cooling unit comprises a front surface air cooler located at an upstream position of the desiccant wheel and a rear surface air cooler located at a downstream position of the desiccant wheel.
